## Europäisches Patentamt
## European Patent Office
## Office européen des brevets

(11) Publication number: **0 041 859**
**A1**

(12) **EUROPEAN PATENT APPLICATION**

(21) Application number: **81302534.3**

(22) Date of filing: **08.06.81**

(51) Int. Cl.³: **B 60 R 21/10**
**A 62 B 35/02**

(30) Priority: **10.06.80 GB 8018964**
**10.09.80 GB 8029275**

(43) Date of publication of application:
**16.12.81 Bulletin 81/50**

(84) Designated Contracting States:
**DE FR IT SE**

(71) Applicant: **KANGOL MAGNET LIMITED**
**Norfolk Street**
**Carlisle Cumbria CA2 5HX(GB)**

(72) Inventor: **Ashworth, Roger Anderton**
**16 Rosemary Drive**
**Bromham Bedfordshire(GB)**

(74) Representative: **Jones, Ian et al,**
**POLLAK MERCER & TENCH High Holborn House 52-54**
**High Holborn**
**London WC1V 6RY(GB)**

(54) **Vehicle seat belt connection device.**

(57) In a two-door road vehicle with rear seats, the seat belt associated with each front seat has its lower outboard end connected to the vehicle body by means of an elongate member (2) along which the belt end can slide forwardly for use and rearwardly when out of use to clear the door aperture under the pull of a retractor spring, the elongate member (2) extending to a free end from a bolt connection into a tapped anchorage socket, associated with an anti-rotation fastening comprising a pin received in a plain hole or a self tapping screw connection.

FIG. 4A

-1-

VEHICLE SEAT BELT CONNECTION DEVICE

DESCRIPTION

The invention relates to a vehicle seat belt connection device.

In two-door road vehicles having rear seats, access to these is obtained by folding forward the front seats or the back portions thereof. Three-point seat belts fitted to the front seats have an end anchorage on the door sill, normally well forward of the pillars at the rear of the doors, and extend upwardly from this anchorage when not in use to a fitting on the door pillar above the level of the shoulder of seat occupant. This upper fitting may be a second end anchorage where the belt is part of a static belt system but will more usually be a guide loop from which the belt extends downwardly to a spring-loaded retractor with locking arrangements effective in emergency situations. In either case, the belt is brought into use by attachment of a buckle part freely slidable thereon to a mating buckle part on the inner side of the seat. In either case also, the belt when out of use extends diagonally across the lower rear corner of the door aperture and seriously impedes ingress to and egress from the rear seats.

In Patent Publication GB 2 003 020, it is proposed to solve this problem in systems including a retractor by providing a longitudinally extending bar at the sill around which the end of the loop is secured for sliding between a forward position of use, to which it is drawn by the user in connecting the buckle parts, and a rear position, to which it is drawn by the retractor and in which obstruction of the door aperture is reduced or eliminated. The bar must anchor the seat belt to the vehicle strongly enough to resist the pull which the belt would experience in extreme deceleration conditions and consequently two vehicle attachment points are provided one for each end of the bar. As compared with the conventional systems requiring a single anchorage position for the belt end, the disadvantage is incurred that an additional strong attachment position has to be provided in the vehicle. The requirement for a second anchorage position moreover militates against mounting of the bar in place of the fixed belt and connection to improve an existing vehicle.

The invention accordingly provides a connection device for a vehicle seat belt, the device comprising a portion arranged for securement of the device to a vehicle body, and an elongate member extending from the securement portion to a free end, the elongate member being arranged to have the seat belt connected thereto for sliding therealong.

The invention also provides a connection device for a vehicle seat belt, the device comprising an elongate member arranged to have the seat belt connected thereto for sliding therealong and a portion for securement of the device to a vehicle body, the securement portion being located at or in the region of one end of the elongate member only.

Conveniently, the securement portion has an aperture through which can extend a bolt for reception in a tapped anchorage hole in the vehicle body, and means for establishing a secondary connection to the vehicle body at a position to oppose rotation of the device around such a bolt. The device can be such that the anti-rotation fixture need contribute little to the strength required to resist the belt tension in emergency conditions; it can consequently be of a very simple form, necessitating little preparation of the vehicle.

The invention is further described below, by way of example, with reference to the accompanying drawings, in which:

Figures 1A and 1B are side and end views respectively of a first vehicle seat belt connection device embodying the invention;

Figures 2A and 2B are like views of a second connection device embodying the invention;

Figure 3 is a side view of a third connection device embodying the invention;

Figures 4A and 4B are side and end views respectively of a fourth belt connection device embodying the invention; and

Figure 5 is a partial schematic side view of a vehicle interior showing the device of Figures 1A and 1B mounted therein.

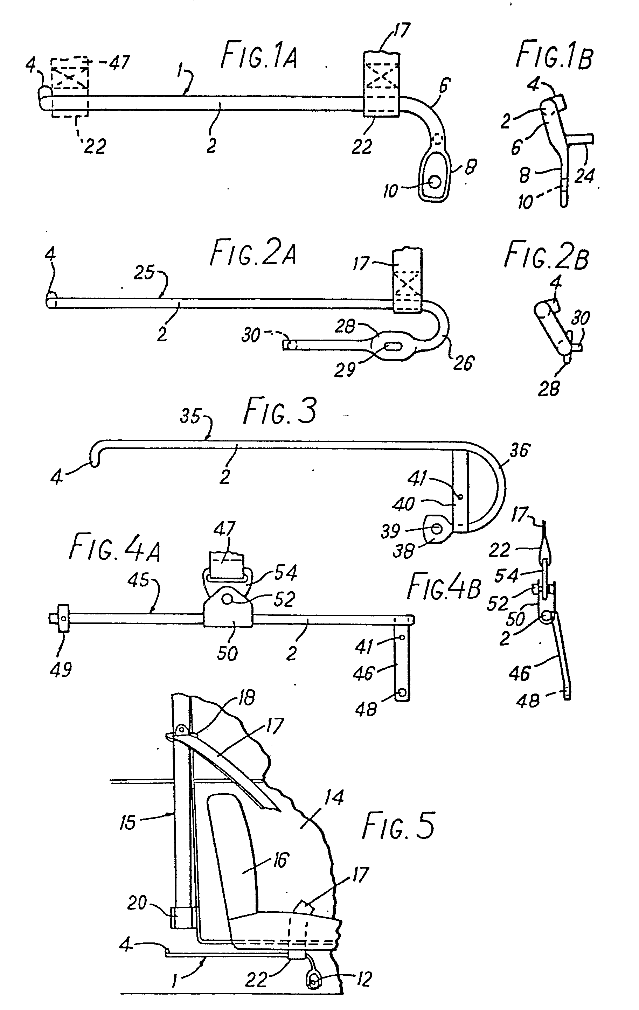

The connection device 1 shown in Figures 1A and 1B, and in Figure 5, comprises a unitary rod member, for example, of hardened steel, having a generally linear portion 2, with a short rear end portion 4 turned inwardly. At its forward end, the member is bent down approximately through 90° to form a curved portion 6 which terminates in a flattened mounting portion 8 for securement of the device in the vehicle.

The flattened mounting portion 8 has an aperture 10 for receiving, as shown in Figure 5, a bolt 12 which extends therethrough into the tapped hole conventionally provided in the sill beneath a vehicle door 14, at a position appropriate to provide an anchorage for a fitting at the end of a portion 17 of a belt 15 included in a seat belt system associated with a vehicle front seat 16 adjacent the door. The vehicle illustrated is a private passenger vehicle of the two-door type in which access to the rear seats is

-4-

had by tilting forward the seat 16 or the back portion of this seat. As shown in Figure 1B, the curved portion 6 of the device is inclined to the plane of the portion 8, so that the portion 2 is spaced from the sill, against which the free end of the end portion 4 abuts.

The belt portion 17 extends upwardly from the sill to a guide loop 18 on the pillar at the rear edge of the door 14, and descends from the guide loop to a retractor 20 mounted near the foot of the pillar and preferably recessed therein. The guide loop 18 is shown as being above the shoulder height of the occupant of the seat but may be at a lower position. A buckle part (not shown) is carried by the belt portion 17, so as to be adjustable in position therealong and is connected in use to a mating buckle portion mounted on the vehicle floor at the inner side of the seat. The belt portion 17 thus extends across the occupant to provide diagonal and lap portions, the necessary length of belt being drawn from the retractor 20 against the force of a retractor spring therein. When the belt 15 is out of use, the retractor spring pulls the belt portion 17 over towards the door and it will be seen from the positions of the sill anchorage and the loop 18 that the belt portion would extend diagonally across the door aperture, to present an obstruction to passengers entering or leaving the back seats, if it terminated at the sill anchorage. However the belt portion 17 is formed in a loop 22 around the rod portion 2 so as to be slidable therealong.

When the belt is in use, the belt loop 22 will be pulled forwardly along the rod portion 2, until it reaches the end position shown in solid line in Figures 1A and 5. When the belt is not in use, the retractor spring pulls the belt back along the rod portion 2 approximately to the out-of-use end position shown in broken line in Figure 1A. The rod portion 2 may have

-5-

a slight upward inclination in the rearward direction to assist this movement. The belt portion 17 is then wholly rearward of the door aperture, and offers no obstruction to passengers entering or leaving the back seats. The rearward movement of the loop 22 is limited by the end portion 4 of the rod member.

In the event of a collision or the like, the very considerable stress imposed on the belt by the inertia of the wearer's body will be transmitted by the curved end portion 6 of the device to the anchorage, and this portion is of adequate strength to transmit this stress substantially without bending. A clockwise rotational force (as seen in Figure 5) will be exerted on the connection provided by the bolt 12 and a lesser force in the same direction will be applied in the out-of-use position of the belt by the retractor spring. These forces are resisted by a peg 24 welded to the curved portion 6 just above the mounting portion 8 and received in a plain aperture in the metal wall of the sill above the anchorage hole receiving the bolt 12.

In the following description of the illustrated connection devices parts equivalent to those of Figures 1A and 1B are indicated by the reference numerals used in those figures.

In the connection device 25 of Figures 2A and 2B, the forward end of the rod portion 2 is continuous with a curved portion 26 which is carried round through 180°. At the completion of this curvature an integral flattened, widened, portion 28 is provided with a slot 29 for receiving a bolt such as the bolt 12. The device 25 is continued back beyond the portion 28 parallel to, and with the same cross-section as, the portion 2 to mount at its free end a peg 30 which is received in a hole in the sill to serve as an anti feature in the same way as the peg 24 of Figures 1A and 1B. As appears from Figure 2B, the device 25 is shaped so that the rod portion 2 is spaced from the sill surface abutted by the slotted portion 28.

-6-

The connection device 35 of Figure 3 again has the forward end of the rod portion 2 continuous with a portion 36 curved downwardly through 180° to a flattened end portion 38 apertured at 39 for the bolt 12. A strap 40 welded across the end portion 36 has an aperture 41 for a second fastener for example a self-tapping screw to resist rotation about the axis of the bolt 12. The rear end portion 4 here turns downwardly; the curved portion 36 and the strap 40 are bent to space the rod portion 2 away from the sill.

In a modification, the strap 40 is omitted and rotation is prevented by an aperture for a second fastener in the flattened portion 38.

The fourth connection device 45 of the Figures 4A and 4B again includes a metal strap 46 welded to the rod portion 2 at its upper end. An aperture 48 for the bolt 12 is located at the lower end of the strap. The aperture 41 for the secondary fastener is provided at any convenient position along the strap 46. Instead of the curved end 4, a stop ring 49, which can be fixed at a desired position by means of a set screw, is provided to limit rearward movement of the belt end.

Moreover, the belt portion 17 is slidably secured to the rod portion 2 by means of a generally U-shaped slider 50 having aligned apertures at the free ends of its limbs for receiving a bolt 52 which extends also through a hole in a generally triangular metal fitting 54 provided with a slot through which the belt portion 17 is looped. The fitting 54 may be of the kind provided at the end of a seat belt, for direct connection to the sill anchorage, in a conventional system. All the described embodiments can be employed in place of such a direct connection to improve such a system but the slider 50 of the device of Figures 4A and 4B is particularly advantageous for this purpose as it is unnecessary to release the belt portion 17 from the original fitting 54. Such a slider 50 and/or the ring stop 49 can of course be used in the other devices illustrated if desired.   Moreover the pegs
24 and 30 and the secondary apertures 41 can be
interchanged between the various embodiments if
desired.

CLAIMS

1. A connection device for the seat belt of a vehicle seat belt system, the device having an elongate portion (2) to which the seat belt is connected for sliding therealong and a securement portion (8;28;38) for securement of the device within a vehicle body, characterised in that the elongate portion (2) extends from the securement portion to a free end.

2. A connection device as claimed in claim 1 wherein the securement portion has an aperture (10;29;39;48) for receiving a bolt (12) and a secondary securement means (24,30,41) for establishing a secondary securement to the vehicle body at a position to oppose rotation of the device around the bolt.

3. A connection device as claimed in claim 2 wherein the secondary securement means comprises a second aperture (41) through the securement portion for reception of a fastener element therethrough.

4. A connection device as claimed in claim 2 wherein the secondary securement means comprises a projecting peg (24;30) for reception in a hole in the vehicle body.

5. A connection device as claimed in claim 1, 2, 3 or 4 having a slider (50) slidable along the elongate portion (2), the slider being arranged for the connection thereto of a fitting (54) at the end of the seat belt.

6. A connection device as claimed in any preceding claim having a stop element (49) in the region of the free end of the elongate portion (2) to prevent escape of the belt from the elongate portion, the stop element being selectively releasable to permit such escape.

7. A connection device as claimed in any preceding claim wherein the securement portion (8;28;38;46) is an extension of the elongate portion (2) at an angle to the direction thereof.

8. A vehicle comprising a vehicle body containing front and rear seats, the front seat (16) including a seat back portion mounted for forward folding, a vehicle door (14) adjacent the front seat and permitting access to the front seat and to the rear seat when the front seat back portion is folded forward, a seat belt (15) associated with the front seat, and a connection device as claimed in any preceding claim, the seat belt being connected to the elongate portion (2) of the device for sliding therealong, and the device being secured to the vehicle body with the elongate portion extending generally horizontally beneath the door and rearwardly from the securement portion.

9. A vehicle as claimed in claim 8 having a spacer portion (6;26;36;46) between the elongate portion (2) and the securement portion of the connection device, the spacer portion spacing the elongate portion from a surface of the vehicle body engaged by the securement portion.

10. A vehicle as claimed in claim 8 or 9 wherein the belt (15) is connected to the elongate portion (2) by means (50) including a bolt (52) and the connection device is secured to the vehicle body by a bolt (12) interchangeable with the first-mentioned bolt (52).

FIG.1A

FIG.1B

FIG.2A

FIG.2B

FIG.3

FIG.4A

FIG.4B

FIG.5

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| D | GB - A - 2 003 020 (AUTOLIV) <br> * page 2, lines 9 to 19; fig. 1 * <br> -- | 1,2 | B 60 R 21/10 <br> A 62 B 35/02 |

TECHNICAL FIELDS SEARCHED (Int. Cl.³)

A 62 B 35/00
B 60 R 21/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

& member of the same patent family, corresponding document

The present search report has been drawn up for all claims

| Place of search | Date of completion of the search | Examiner |
|---|---|---|
| Berlin | 28-07-1981 | BECKER |

EPO Form 1503.1 06.78